Europäisches Patentamt

European Patent Office

Office européen des brevets

(19)

(11) **EP 0 671 477 B1**

(12)

# FASCICULE DE BREVET EUROPEEN

(45) Date de publication et mention
de la délivrance du brevet:
**23.04.1997 Bulletin 1997/17**

(51) Int Cl.⁶: **C22B 7/02**

(21) Numéro de dépôt: **95470008.4**

(22) Date de dépôt: **07.03.1995**

(54) **Procédé de retraitement de sous-produits de l'industrie métallurgique**

Verfahren zum Aufarbeiten metallurgischer Abfallprodukte

Process for treating metallurgical by-products

(84) Etats contractants désignés:
**BE DE ES FR GB IT LU NL**

(30) Priorité: **07.03.1994 FR 9402738**

(43) Date de publication de la demande:
**13.09.1995 Bulletin 1995/37**

(73) Titulaire: **SCEGI Sarl**
**F-57070 St-Julien Les Metz (FR)**

(72) Inventeurs:
• **Frada, Jean-Michel, Cabinet Ballot Schmit**
**F-57000 Metz (FR)**

• **Evrard, Omer, Cabinet Ballot Schmit**
**F-57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
DE-A- 2 242 351     DE-C- 276 776
DE-C- 461 556       FR-A- 588 759
FR-A- 1 598 027     FR-A- 2 291 280
FR-A- 2 357 483     US-A- 1 378 699
US-A- 1 825 949     US-A- 4 071 357

## Description

L'invention concerne un procédé de traitement de sous-produits de l'industrie métallurgique, obtenus en particulier lors de l'élaboration ou du traitement de produits métallurgiques ferreux, ces sous-produits constituant généralement des déchets industriels. Ce procédé est notamment destiné à récupérer et recycler les composants de ces sous-produits.

Dans l'industrie métallurgique en général, et en particulier la métallurgie des alliages ferreux, des unités de production d'acier liquide jusqu'aux ateliers de traitement de produits sidérurgiques commercialisés sous forme de tôles revêtues ou autres produits semi-finis, se pose le problème du retraitement des résidus ou sous-produits générés lors des différentes étapes de fabrication, que ce soit sous forme de poussières, liquides, boues, ...etc. Ce retraitement est de plus en plus nécessaire pour éviter des pollutions et des mises en décharge coûteuses, et aussi pour revaloriser ces déchets en récupérant et recyclant certains au moins de leurs composants.

Ainsi en particulier se pose le problème du traitement des déchets obtenus lors de l'élaboration de la fonte ou de l'acier, tels que les poussières d'aciéries électriques, ou lors du traitement de surfaces de produits en fonte ou acier, tels que les boues d'électrozingage issues des unités de revêtement de tôle par électrodéposition de zinc ou zinc-nickel.

Les poussières d'aciéries électriques sont particulièrement riches d'une part en zinc, du fait que la matière première chargée dans les fours à arc de ces aciéries comporte des ferrailles comprenant elles-mêmes, et de plus en plus, des tôles électrozinguées, et d'autre part, dans une moindre mesure, en plomb. La teneur en zinc de ces poussières peut dépasser largement 20 % et celle en plomb dépasser 5 %. Le traitement de ces poussières vise donc naturellement d'une part à éviter la mise en décharge de ces sous-produits, particulièrement nocive pour l'environnement, et d'autre part à les valoriser en recyclant leurs composants, notamment ceux de forte valeur économique, tels que le zinc. Il en est de même en particulier pour les boues d'électrozingage, qui ont également une forte teneur en zinc.

On connaît déjà des procédés de traitement, utilisés en particulier pour récupérer le zinc des poussières d'aciéries. Un premier type met en oeuvre des techniques pyrométallurgiques consistant à chauffer fortement les poussières, et à récupérer le zinc ainsi vaporisé puis recondensé par refroidissement sous forme d'oxyde ZnO.

Dans un procédé de ce type, les poussières d'aciéries, mélangées avec les additifs nécessaires et du coke qui sert d'agent thermique et réducteur, sont chauffées à 1250°C dans un four tournant. Le zinc et le plomb s'évaporent de la charge et sont oxydés dans l'atmosphère du four avec un excès d'oxygène et sont évacués avec les gaz de sortie. L'oxyde résultant est recueilli dans un système de purification des gaz de sortie consistant en une tour de refroidissement et un électrofiltre. Ce procédé n'est cependant pas approprié pour traiter des produits riches en fer et relativement pauvres en métaux non ferreux, et il est coûteux en énergie.

D'autres types de traitement utilisés sont des procédés hydrométallurgiques, basés sur une attaque chimique, acide ou basique, des poussières. On connaît en particulier un procédé de ce type dans lequel les poussières sont traitées par une attaque ammoniacale avec une solution de chlorure d'ammonium, qui conduit à une dissolution des oxydes métalliques, notamment des oxydes de zinc, de cuivre et de cadmium en formant des ions complexes de ces métaux ; on ajoute ensuite un réactif organique agissant comme solvant, qui permet d'extraire les métaux de ces ions et de régénérer ainsi le chlorure d'ammonium, et on procède enfin à une électrolyse de la solution pour récupérer les métaux. Mais l'attaque ammoniacale selon ce procédé ne permet pas d'attaquer les composés difficilement solubles, tels que par exemple le ferrite de zinc, qui représente une part importante du zinc contenu dans les poussières d'aciéries, et de plus nécessite une électrolyse de la solution, pour récupérer le zinc sous forme métallique, et l'utilisation d'un solvant, ce qui complique la mise en oeuvre du procédé.

On connaît également un procédé hydrométallurgique consistant essentiellement à effectuer une attaque basique des poussières par une solution concentrée de soude, qui conduit à une dissolution des sels de zinc et de plomb. Après séparation des résidus solides, non dissous, par centrifugation, la solution est ensuite traitée par du zinc en poudre pour précipiter le plomb, puis le zinc métallique est obtenu par électrolyse. Ce procédé n'est pas non plus efficace lorsque les poussières sont riches en ferrite de zinc, inattaqué par la solution de soude, et nécessite lui aussi une électrolyse pour récupérer le zinc métallique.

Les procédés ci-dessus, pyrométallurgiques ou hydrométallurgiques, s'appliquent aussi, dans leurs principes, au traitement d'autres sous-produits, par exemple les boues d'électrozingage, ainsi qu'à d'autres sous-produits des industries métallurgiques, en vue du recyclage des métaux qu'ils contiennent.

L'invention a pour but de proposer un autre procédé de traitement de poussières d'aciérie électrique ou de boues d'électrozingage, permettant la récupération et le recyclage des métaux qu'ils contiennent à un moindre coût, par une consommation d'énergie réduite, ne nécessitant pas obligatoirement d'opération d'électrolyse, et permettant cependant d'obtenir des produits directement valorisables, sous forme d'oxyde métallique de grande pureté.

Avec ces objectifs en vue, l'invention a pour objet un procédé de traitement de poussières d'aciérie électrique ou de boues d'électrozingage, constituant des sous-produits obtenus lors de l'élaboration ou du traitement de produits en acier, ces sous-produits contenant au moins un composé d'un métal du groupe formé par Zn, Ni, Cu, Cd, Co, Mn, en vue de la récupération du dit métal, procédé au cours duquel on effectue une attaque ammoniacale des dits sous-produits, pour dissoudre le dit composé et complexer le dit métal, caractérisé en ce que l'attaque ammoniacale est effectuée par une solution tampon ammoniacale, on effectue une séparation des résidus non dissous contenant du fer et de la solution contenant le dit métal complexé, et on effectue ensuite une neutralisation du pH de la solution, de manière à faire précipiter le dit métal sous forme d'hydroxyde.

Schématiquement, le principe du procédé selon l'invention est basé sur la combinaison d'une étape de complexation des métaux contenus dans les sous-produits traités et que l'on souhaite récupérer, l'agent complexant étant l'ammoniac $NH_3$, avec une étape ultérieure de neutralisation de la solution contenant les dits métaux complexés, cette neutralisation conduisant à un abaissement du pH entre 4 et 7, alors que le pH de la solution tampon est, de fait, entre 9 et 10.

Cet abaissement du pH peut être obtenu par une désorption de l'ammoniac de la solution, effectuée par exemple par un balayage par un flux d'air qui constitue l'agent désorbant, ou encore par une acidification réalisée par ajout d'un acide, par exemple d'acide chlorydrique, à la solution.

Les métaux comme le zinc, le nickel, le cuivre, le cadmium et le cobalt présentent une affinité particulière pour la complexation par l'ammoniac. Cette réactivité peut être symbolisée par la réaction :

$$M^{2+} + xNH_3 <===> M(NH_3)_x^{2+} \qquad (1)$$

où M représente l'un des métaux indiqués ci-dessus.

La désorption est assurée par un flux d'air, créé par un ventilateur, et dirigé sur la solution, conduisant à l'évaporation de l'ammoniac selon la réaction :

$$M(NH_3)_x^{2+} + air <===> M^{2+} + xNH_3 + air \qquad (2)$$

Cette désorption de l'ammoniac de la solution contenant les ions métalliques complexes induit un abaissement du pH qui perturbe l'équilibre des cations métalliques en solution $M^{2+}$ vis-à-vis de leurs hydroxydes $M(OH)^2$ de sorte que les hydroxydes précipitent, selon la réaction :

$$M^{2+} + 2OH^- =====> M(OH)_2 \qquad (3)$$

L'association des réactions (2) et (3) s'exprime par l'équilibre suivant :

$$M(NH_3)_x^{2+} + air + 2OH^- ===> M(OH)_2 = xNH_3 + air \qquad (4)$$

Il en résulte que l'opération de désorption conduit à la formation directe d'un précipité d'hydroxyde métallique, lequel est ensuite déshydraté après lavage, de manière classique, pour obtenir l'oxyde métallique de grande pureté, valorisable tel quel, sans qu'il soit nécessaire de rechercher à obtenir le métal sous forme non oxydée.

Par ailleurs, l'ammoniac désorbé est recyclé pour reconstituer le tampon ammoniacal.

Les explications données ci-dessus pour une neutralisation du pH réalisée par une désorption restent valables pour tout autre moyen d'abaissement du pH, puisque c'est en fait cet abaissement qui conduit à la précipitation d'hydroxide.

L'invention permet ainsi de récupérer des produits directement valorisables, tout en limitant la consommation d'énergie nécessaire, et sans générer d'autres produits nuisibles pour l'environnement.

Selon d'autres caractéristiques additionnelles de l'invention :

- la solution tampon est une solution $NH_3 / NH_4Cl$, ou $NH_3 / (NH_4)_2 SO_4$, ou $NH_3 / (NH_4)_2 CO_3$,
- la concentration de la solution tampon est de 0,5 à 10 moles/litres,
- l'attaque ammoniacale est effectuée à une température de 20 à 100°C.

Selon une disposition particulière de l'invention, pour le traitement de sous-produits contenant notamment des composés de fer, de plomb et de zinc, issus de procédés d'élaboration de produits sidérurgiques, on utilise une solution tampon ammoniacale suffisamment concentrée pour dissoudre les composés de zinc et complexer le zinc, on effectue la séparation des composés non dissous et, avant neutralisation du pH, on effectue une cémentation au zinc pour précipiter le plomb également dissous dans la solution. Dans ce cas, la solution est une solution ammoniacale à environ 4 à 5 moles/litres et l'attaque ammoniacale est effectuée à une température de 80 à 100°C.

Selon une autre disposition particulière, pour le traitement de sous-produits dans lesquels au moins un composé d'un métal est difficilement soluble dans la dite solution, préalablement à l'attaque ammoniacale, on effectue une réduction des dits sous-produits pour extraire du dit composé un oxyde du dit métal. Préférentiellement, la réduction est réalisée par un balayage de gaz réducteur, tel que l'hydrogène, à une température de 200 à 900°C.

Cette opération de réduction peut aussi être menée en présence de réduteurs solides comme le zinc métallique.

Dans ce cas, pour le traitement de sous-produits contenant notamment des composés de fer, de plomb et de zinc, issus de procédés d'élaboration de produits sidérurgiques, on utilise une solution tampon ammoniacale de concentration suffisante pour dissoudre les oxydes de zinc résultant de la réduction sans dissoudre les composés de plomb, on traite les résidus non dissous par une attaque basique pour mettre le plomb en solution et on sépare les résidus non dissous par cette attaque, la solution contenant le plomb étant ensuite soumise à une neutralisation pour précipiter le plomb sous forme d'hydroxyde.

D'autres caractéristiques et avantages de l'invention ressortiront de la description qui va être faite à titre d'exemple d'un procédé de traitement et de valorisation, conforme à l'invention, des poussières d'aciéries électriques, pour notamment récupérer et recycler le zinc, qu'elles contiennent en forte proportion, sous forme d'oxyde ZnO de grande pureté, qui peut par exemple être directement réutilisé sous cette forme dans l'industrie du caoutchouc, et d'un procédé de traitement de sous-produits contenant des composés de zinc plus facilement solubilisables.

On se reportera aux dessins annexés, dans lesquels :

- la figure 1 est un schéma d'une installation de retraitement des poussières d'aciéries électriques, à teneur élevée en ferrite de zinc.
- la figure 2 est un schéma d'une installation de traitement par attaque directe des sous-produits par une solution ammoniacale, applicable dans le cas de sous-produits contenant pas ou peu de composés de zinc insolubles dans une telle solution.

Comme cela a été indiqué précédemment, les poussières d'aciérie électrique contiennent une forte proportion de zinc, ainsi qu'on le voit dans le tableau 1 ci-dessous :

Tableau 1

| Eléments | Analyse chimique % | Phases minéralogiques détectées aux rayons X |
|---|---|---|
| Fe | 22,01 | $ZnFe_2O_4$ |
| Zn | 23,36 | $ZnFe_2O_4$ et |
| Pb | 5,37 | ZnO |
| Cd (ppm) | 900 | Pbo |
| Mn | 2,03 | |
| Si | 1,21 | |
| Mg | 0,72 | |
| Al | 0,54 | |
| Na | 2,50 | |
| K | 2,49 | |
| Ca | 7,66 | |
| | | CaO |

Ce tableau 1 donnant, à titre d'exemple, l'analyse et la composition chimique de ces poussières et le tableau 2 ci-après recensant les principaux composés présents et leur proportion. On remarque que le zinc est présent sous deux formes : l'oxyde ZnO et le ferrite $ZnFe_2O_4$, les phases majeures restantes sont constituées d'oxyde de plomb PbO, de chaux CaO et silice $SiO_2$. Il est à noter que tout le fer est présent sous forme de ferrite $ZnFe_2O_4$, lequel contient une grande partie du zinc total des poussières.

Tableau 2

| Phases majoritaires | % en masse |
|---|---|
| $ZnFe_2O_4$ | 46,7 |
| ZnO libre | 15,4 |
| ZnO total | 29,5 |

Tableau 2   (suite)

| Phases majoritaires | % en masse |
|---|---|
| CaO | 10,7 |
| SiO$_2$ | 2,6 |
| PbO | 5,3 |
| MnO | 2,9 |

Le ferrite de zinc étant difficilement soluble dans une solution ammoniacale, un prétraitement s'avère nécessaire si l'on veut récupérer le maximum possible de zinc.

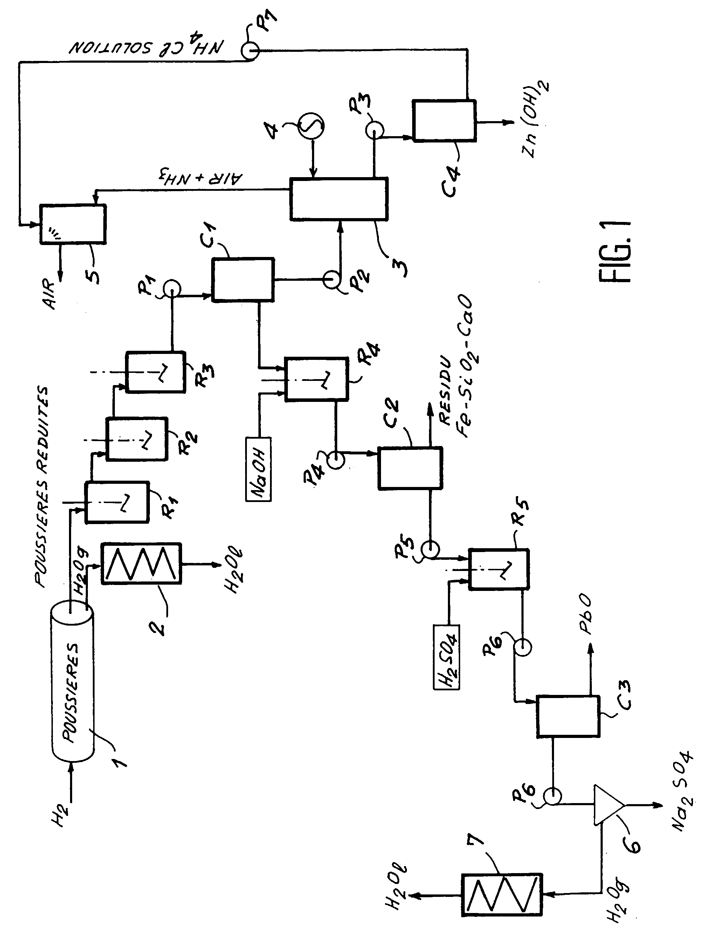

Le procédé de traitement de ces poussières, représenté à la figure 1, comporte donc une première étape de préréduction des poussières. Cette préréduction est effectuée dans un four tournant 1 dans lequel les poussières brutes sont introduites, avec un balayage d'hydrogène en tant que fluide réducteur. La température est de 200 à 900°C, préférentiellement 500°C.

Au cours de cette étape, la réaction suivante, relative au ferrite de zinc, se réalise :

$$ZnFe_2O_4 + 3H_2 ==> ZnO + 2Fe + 3H_2O.$$

Simultanément, l'oxyde de plomb est réduit.

Cette étape conduit donc à un fort dégagement de vapeur d'eau, condensée dans le condenseur 2.

Les poussières réduites obtenues contiennent alors essentiellement les composés suivants : Fe, SiO$_2$, CaO, ZnO, Pb, dans lesquels le zinc se présente sous forme d'oxyde, qui peut être facilement dissout dans une solution ammoniacale.

Les poussières issues du four sont introduites dans une série de réacteurs R1, R2, R3 contenant une solution tampon ammoniacale à une mole/litre, soit 17 g/l en ammoniac NH$_3$ et 53 g/l en chlorure d'ammonium NH$_4$ Cl. La réaction est réalisée à une température voisine de l'ambiante, soit environ 20 à 40°C, et permet de solubiliser presque tout le zinc (plus de 90 %) selon la réaction :

$$Zn(OH)_2 + 4 NH_3 ==> Zn (NH_3)_4{}^{2+} + 2 OH^-$$

L'attaque du mélange Fe - ZnO - Pb - CaO - SiO$_2$ conduit donc à une solution de Zn (NH$_3$)$_4{}^{2+}$ et à un résidu solide de Fe - Pb - Cao - SiO$_2$.

Ce mélange est transporté par une pompe P1 dans une centrifugeuse C1, où les dits résidus sont séparés de la solution, laquelle est dirigée, par une pompe P2 vers une colonne de désorption 3, dans laquelle de l'air est introduit par un ventilateur 4, à une température d'environ 40°C par exemple. Dans cette colonne se produit une désorption de l'ammoniac contenu dans la solution, qui est entraîné par le flux d'air vers un réservoir 5. La désorption de l'ammoniac conduit à un abaissement du pH, qui provoque la précipitation d'hydroxyde de zinc Zn (OH)$_2$. La solution contenant l'hydroxyde de zinc est entraînée par une pompe P4 vers une centrifugeuse C4, d'où le précipité est séparé de la solution, celle-ci étant renvoyée par une pompe P7 vers le réservoir 5, où elle reconstitue, avec l'ammoniac issu de la colonne de désorption, une solution NH$_4$ Cl/NH$_3$, recyclée vers les réacteurs R1, R2, R3, l'air de transport de l'ammoniac étant rejeté à l'atmosphère.

L'hydroxyde de zinc séparé par la centrifugeuse C4 en est extrait, et par un simple séchage, conduit finalement à l'obtention d'un oxyde de zinc ZnO à 98 % de pureté, directement valorisable.

Les résidus issus de la centrifugeuse C1 comportant du plomb, il est nécessaire de séparer ce plomb des autres composés, d'une part pour le récupérer en vue d'une éventuelle revalorisation, d'autre part pour pouvoir réutiliser le mélange fer, silice, chaux, par exemple en cimenterie, ou en le recyclant vers l'aciérie. A cette fin, les résidus non dissous par l'attaque ammoniacale sont envoyés dans un réacteur R4 où ils subissent une attaque basique par une solution de soude à une mole/litre, qui a pour effet de solubiliser le plomb sous forme de plombate PbO$_2{}^{2-}$. La solution est transportée par une pompe P4 dans une centrifugeuse C2 qui extrait les résidus de fer, silice et chaux. La solution contenant les ions PbO$_2{}^{2-}$ est transportée par une pompe P5 dans un réacteur R5, où elle est neutralisée par ajout d'acide sulfurique pour précipiter l'hydroxyde de plomb Pb (OH/2), séparé de la solution par une centrifugeuse C3. On notera que la récupération du plomb peut aussi être effectuée par d'autres méthodes que la combinaison attaque basique - attaque acide décrite ci-dessus. Une pompe P6 assure le transport de la solution dans un évaporateur 6 d'où on récupère le sulfate de sodium NA$_2$ SO$_4$, la vapeur d'eau en résultant étant recondensée par un condenseur 7.

Dans le cas où les sous-produits à traiter ne contiennent pas ou peu de composés insolubles dans l'ammoniac, par exemple, quand ces sous-produits sont constitués d'oxydes, d'hydroxydes, de carbonates d'hydrogénocarbonates ou encore de sels métalliques, l'étape de préréduction indiquée précédemment peut être supprimée. C'est notamment le cas pour des boues d'électrozingage où prédomine le zinc sous les formes hydroxyde et hydrogénocarbonate.

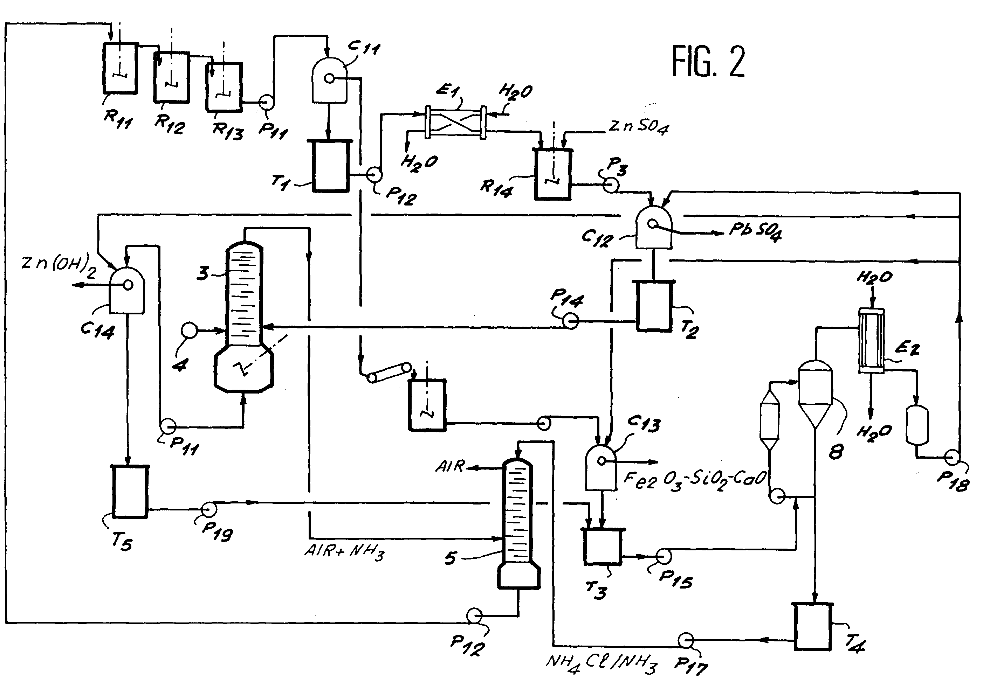

Mais une attaque directe peut également être effectuée sur des poussières d'aciéries contenant peu de ferrite de zinc. Dans ce cas, le retraitement de ces poussières est réalisé selon le schéma représenté à la figure 2. L'attaque ammoniacale est réalisée dans trois réacteurs R11, R12, R13 dans lesquels sont directement introduits les sous-produits à traiter. Pour assurer la dissolution la plus complète possible des composés de zinc, on utilise alors une solution tampon ammoniacale $NH_3$ / $NH_4$ Cl concentrée, par exemple à 5 moles/litres, l'attaque étant effectuée à une température de 90 à 100°C pendant environ trois heures.

Des essais réalisés en laboratoire ont montré que les conditions d'attaque forte permettent de solubiliser environ 80 % du zinc contenu dans les poussières sous la forme du complexe Zn $(NH_3)_4^{2+}$, mais entraînent également une solubilisation du plomb sous forme du complexe $PbCl_3^-$.

La solution issue des réacteurs R11, R12, R13, contenant les complexes de zinc et de plomb et, à l'état solide, des résidus d'oxyde de fer, de silice et de chaux non attaqués, est transportée par une pompe P11 dans une centrifugeuse C11 qui sépare ces résidus. Ceux-ci sont transportés dans une centrifugeuse C13 qui extrait l'oxyde de fer $Fe_2O_3$, la chaux CaO et la silice $SiO_2$, qui peuvent ensuite être séchés à l'air libre.

La solution chargée de zinc et de plomb complexés issue de la centrifugeuse C11 est transporté par une pompe P12, à travers un échangeur E1, qui permet d'ajuster sa température, jusqu'à un réacteur R14. L'ajout de ce réacteur de sulfate de zinc Zn $SO_4$ ou de zinc en poudre provoque la précipitation de sulfate de plomb, ou de plomb métallique respectivement, qui est extrait par une centrifugeuse C12.

La solution ammoniacale chargée en zinc est envoyée par une pompe P14 dans une colonne de désorption, où, comme dans la variante précédente, la désorption de l'ammoniac entraîne la précipitation d'hydroxyde de zinc, séparé de la solution par une centrifugeuse C14. La solution ammoniacale, libérée de l'hydroxyde de zinc, est envoyée par les pompes P19, P5, P7 et au travers de réservoirs tampons T5, T3, T4, vers le réservoir 5, dans lequel arrive également l'air chargé d'ammoniac issu de la colonne de désorption 3. La solution ammoniacale reconstituée est recyclée par une pompe P22 vers les réacteurs d'attaque R11, R12, R13.

Par ailleurs, du fait de la forte teneur en chlorure d'ammonium, de la solution d'attaque, il est nécessaire de laver les divers produits obtenus lors du traitement. Ces opérations de lavage sont réalisées dans les centrifugeuses C12, C13, C14 alimentées en eau de rinçage par une pompe P18 ; l'eau de rinçage étant obtenue par évaporation d'une fraction de la solution d'attaque au moyen d'un évaporateur 8 raccordé sur le circuit de la solution, en aval du réservoir 5. Les réservoirs tampons T1, T2, T3, T4 et T5 permettent de réguler les débits lors des différentes opérations du traitement.

Dans le cas du traitement d'autres sous-produits, par exemple des boues d'électrozingage issues des procédés de revêtement de tôles d'acier par du zinc et du nickel, des hydroxydes et hydrogènocarbonates de nickel sont aussi présent dans ces boues.

Certains sous-produits peuvent également contenir en quantité non négligeable du cuivre, et la récupération de ces métaux (Cu, Ni) s'avère d'un grand intérêt. A cette fin, les installations de traitement décrites ci-dessus peuvent être complétées par une installation d'électrolyse, placée dans le circuit de la solution ammoniacale, entre les réacteurs d'attaque et la colonne de désorption. En effet, la solution ammoniacale dissout également le cuivre et le nickel, et l'électrolyse de cette solution permet de récupérer ces éléments sous la forme métallique.

L'invention n'est pas limitée au traitement de sous-produits à forte teneur en zinc, mais s'applique également aux sous-produits contenant des composés de métal aisément complexables par l'ammoniac, notamment le nickel, le cuivre, le cadmium et le cobalt.

En particulier, le procédé pourra être appliqué à la récupération simultanée du zinc et du nickel contenu dans des boues d'électrozingage. En effet, lors de la désorption de l'ammoniac, la précipitation de l'hydroxyde de nickel se produit après celle de l'hydroxyde de zinc, lorsque le Ph de la solution diminue. Moyennant une adaptation de la colonne de désorption, l'homme du métier pourra effectuer la séparation de ces différents hydroxydes et ainsi récupérer et valoriser autant le zinc que le nickel.

Par ailleurs, comme précédemment indiqué, la neutralisation du pH peut être assurée par l'ajout d'un acide, par exemple l'acide chlorhydrique. Dans ce cas un réacteur adapté est utilisé à la place de la colonne de désorption, et l'acide est introduit, par exemple par une pompe, dans la solution contenant le métal complexé.

**Revendications**

1. Procédé de traitement de poussières d'aciérie électrique ou de boues d'électrozingage, constituant des sous-produits obtenus lors de l'élaboration ou du traitement de produits en acier, ces sous-produits contenant au moins un composé d'un métal du groupe formé par Zn, Ni, Cu, Cd, Co, Mn, en vue de la récupération du dit métal, procédé au cours duquel on effectue une attaque ammoniacale des dits sous-produits, pour dissoudre le dit composé et complexer le dit métal, caractérisé en ce que l'attaque ammoniacale est effectuée par une solution tampon ammoniacale, on effectue une séparation du résidu non dissous contenant du fer et de la solution contenant le dit métal complexé, et on effectue ensuite une neutralisation du pH de la solution, de manière à faire précipiter le dit métal sous forme d'hydroxyde.

2. Procédé selon la revendication 1, caractérisé en ce que la solution tampon est une solution $NH_3 / NH_4Cl$, ou $NH_3 / (NH_4)_2SO_4$, ou $NH_3 / (NH_4)_2CO_3$.

3. Procédé selon la revendication 1, caractérisé en ce que la neutralisation du pH est réalisée par une désorption de l'ammoniac de la solution, effectuée par un balayage par un flux d'air.

4. Procédé selon la revendication 1, caractérisé en ce que la neutralisation du pH est réalisée par une acidification de la solution.

5. Procédé selon la revendication 1, pour le traitement des poussières d'aciérie dans lesquelles au moins un composé d'un métal est difficilement soluble dans la dite solution, caractérisé en ce que, préalablement à l'attaque ammoniacale, on effectue une réduction des dites poussières pour extraire du dit composé un oxyde du dit métal.

6. Procédé selon la revendication 5, caractérisé en ce que la réduction est réalisée par un balayage d'un gaz réducteur, notamment de l'hydrogène, à une température de 200 à 900°C.

7. Procédé selon la revendication 5, caractérisé en ce que la réduction est réalisée en présence d'un réducteur solide, à une température de 200 à 900°C.

8. Procédé selon la revendication 1, pour le traitement des boues d'électrozingage contenant notamment des composés de fer, de plomb et de zinc, caractérisé en ce qu'on utilise une solution tampon ammoniacale suffisamment concentrée pour dissoudre les composés de zinc et complexer le zinc, on effectue la séparation des composés non dissous et, avant d'effectuer la dite neutralisation, on effectue une cémentation au zinc pour précipiter le plomb également dissout dans la solution.

9. Procédé selon la revendication 8, caractérisé en ce que la solution tampon ammoniacale est une solution à environ 4 à 6 moles/litres et l'attaque ammoniacale est effectuée à une température de 80 à 100°C.

10. Procédé selon la revendication 5 pour le traitement de poussières contenant notamment des composés de fer, de plomb, de zinc, caractérisé en ce qu'on utilise une solution tampon ammoniacale de concentration suffisante pour dissoudre les oxydes de zinc résultant de la réduction sans dissoudre les composés de plomb, on traite les résidus non dissous par une attaque basique pour mettre le plomb en solution et on sépare les résidus non dissous par cette attaque, la solution contenant le plomb étant ensuite soumise à une neutralisation pour précipiter le plomb sous forme d'hydroxyde.

11. Procédé selon la revendication 10, caractérisé en ce que la solution tampon ammoniacale est une solution à environ une mole d'ammoniac par litre et l'attaque ammoniacale est réalisée à température ambiante, de 20 à 40°C.

**Patentansprüche**

1. Verfahren zum Behandeln von Stäuben aus der Elektrostahlerzeugung oder Schlämmen aus der Elektroverzinkung, welche Abfallprodukte darstellen, die bei der Erzeugung oder Behandlung von Stahlgegenständen erhalten werden, wobei diese Abfallprodukte wenigstens eine Verbindung eines Metalls aus der von Zn, Ni, Cu, Cd, Co, Mn gebildeten Gruppe enthalten, im Hinblick auf die Rückgewinnung des besagten Metalls, wobei im Laufe des Verfahrens ein Ammoniakangriff auf die Abfallprodukte durchgeführt wird, um die Verbindung zu lösen und das Metall zu komplexieren,
dadurch **gekennzeichnet,** daß
der Ammoniakangriff mit einer Ammoniak-Pufferlösung durchgeführt wird, eine Trennung der nicht gelösten, Eisen enthaltenden Rückstände und der das komplexierte Metall enthaltenden Lösung durchgeführt wird und anschließend eine Neutralisierung des pHs der Lösung durchgeführt wird, um das Metall in Form von Hydroxid auszufällen.

**2.** Verfahren nach Anspruch 1,
dadurch gekennzeichnet, daß
die Pufferlösung eine $NH_3/NH_4Cl$- oder $NH_3/(NH_4)_2SO_4$- oder $NH_3/(NH_4)_2CO_3$-Lösung ist.

**3.** Verfahren nach Anspruch 1,
dadurch gekennzeichnet, daß
die pH-Neutralisierung durchgeführt wird durch eine Desorption des Ammoniaks der Lösung, bewirkt durch Spülen mit einem Luftstrom.

**4.** Verfahren nach Anspruch 1,
dadurch gekennzeichnet, daß
die pH-Neutralisierung durch eine Säuerung der Lösung durchgeführt wird.

**5.** Verfahren nach Anspruch 1 zum Behandeln von Stäuben aus der Stahlerzeugung, in denen wenigstens eine Verbindung eines Metalls in der Lösung schwer löslich ist,
dadurch gekennzeichnet, daß
vor dem Ammoniakangriff eine Reduktion der Stäube durchgeführt wird, um aus der Verbindung ein Oxid des Metalls zu gewinnen.

**6.** Verfahren nach Anspruch 5,
dadurch gekennzeichnet, daß
die Reduktion durch ein Spülen mit einem reduzierenden Gas, insbesondere Wasserstoff, bei einer Temperatur von 200 bis 900 °C durchgeführt wird.

**7.** Verfahren nach Anspruch 5,
dadurch gekennzeichnet, daß
die Reduktion in Gegenwart eines festen Reduktionsmittels bei einer Temperatur von 200 bis 900 °C durchgeführt wird.

**8.** Verfahren nach Anspruch 1, zur Behandlung von Schlämmen aus der Elektroverzinkung, die insbesondere Verbindungen von Eisen, Blei und Zink enthalten,
dadurch gekennzeichnet, daß
eine Ammoniak-Pufferlösung verwendet wird, die ausreichend konzentriert ist, um die Zinkverbindungen zu lösen und das Zink zu komplexieren, die Abtrennung der nicht gelösten Verbindungen durchgeführt wird und vor der Durchführung der Neutralisierung ein Zinkeinbrennen durchgeführt wird, um das ebenfalls in der Lösung gelöste Blei auszufällen.

**9.** Verfahren nach Anspruch 8,
dadurch gekennzeichnet, daß
die Ammoniak-Pufferlösung eine Lösung mit ca. 4 bis 6 Mol pro Liter ist und der Ammoniakangriff bei einer Temperatur von 80 bis 100 °C durchgeführt wird.

**10.** Verfahren nach Anspruch 5 zur Behandlung von Stäuben, die insbesondere Verbindungen von Eisen, Blei und Zink enthalten,
dadurch gekennzeichnet, daß
eine Ammoniak-Pufferlösung verwendet wird, die ausreichend konzentriert ist, um die aus der Reduktion resultierenden Zinkoxide zu lösen, ohne die Bleiverbindungen zu lösen, die nicht gelösten Rückstände mit einem Basenangriff behandelt werden, um das Blei in Lösung zu bringen, und die durch diesen Angriff nicht gelösten Rückstände abgetrennt werden, wobei die das Blei enthaltende Lösung anschließend einer Neutralisierung unterzogen wird, um das Blei in Form von Hydroxid auszufällen.

**11.** Verfahren nach Anspruch 10,
dadurch gekennzeichnet, daß
die Ammoniak-Pufferlösung eine Lösung mit ca. 1 Mol Ammoniak pro Liter ist und der Ammoniakangriff bei Umgebungstemperatur von 20 bis 40 °C durchgeführt wird.

# EP 0 671 477 B1

## Claims

1. Process for treating powders from electric steel works or sludges from zinc electroplating constituting by-products obtained during the manufacture or processing of steel products, the said by-products containing at least one compound of a metal of the group consisting of Zn, Ni, Cu, Cd, Co and Mn, with a view to recovering the said metal, in the course of which process the said by-products are subjected to an ammoniacal treatment to dissolve the said compound and to complex the said metal, characterized in that the ammoniacal treatment is performed with an ammoniacal buffer solution, undissolved residues containing iron are separated from the solution containing the said complexed metal, and the pH of the solution is neutralised so as to precipitate the said metal in the form of a hydroxide.

2. Process according to claim 1, characterized in that the buffer solution is a $NH_3$ / $NH_4Cl$, a $NH_3$ / $(NH_4)_2SO_4$ or a $NH_3$ / $(NH_4)_2CO_3$ solution.

3. Process according to claim 1, characterized in that the neutralisation of the pH is performed by desorption of ammonia from the solution effected by passing a flow of air through it.

4. Process according to claim 1, characterized in that the neutralisation of the pH is performed by addition of acid to the solution.

5. Process according to claim 1 for the treatment of powders from steel works in which at least one compound of a metal is barely soluble in the said solution, characterized in that before the ammoniacal treatment, the said powders are subjected to a reduction in order to extract from the said compound an oxide of the said metal.

6. Process according to claim 5, characterized in that the reduction is performed by passing a reducing gas, in particular hydrogen, through at a temperature of 200 to 900°C.

7. Process according to claim 5, characterized in that the reduction is performed in the presence of a solid reducing agent at a temperature of 200 to 900°C.

8. Process according to claim 1 for the treatment of sludges from zinc electroplating containing, in particular, iron, lead and zinc compounds, characterized in that an ammoniacal buffer solution is used which is sufficiently concentrated to dissolve the zinc compounds and to complex the zinc, the undissolved compounds are separated and, before performing the said neutralisation, the zinc is subjected to a cementation process to precipitate the lead also dissolved in the solution.

9. Process according to claim 8, characterized in that the ammoniacal buffer solution is a solution containing about 4 to 6 moles/litre and the ammoniacal treatment is performed at a temperature of 80 to 100°C.

10. Process according to claim 5 for the treatment of powders containing, in particular, iron, lead and zinc compounds, characterized in that an ammoniacal buffer solution is used which is sufficiently concentrated to dissolve the oxides of zinc resulting from the reduction without dissolving the lead compounds, the undissolved residues are subjected to a treatment with a base to dissolve the lead and the residues not dissolved by this treatment are separated, the solution containing the lead then being subjected to a neutralisation to precipitate the lead in a hydroxide form.

11. Process according to claim 10, characterized in that the ammoniacal buffer solution is a solution containing about one mole of ammonia per litre and the ammoniacal treatment is performed at an ambient temperature of 20 to 40°C.

FIG.1

EP 0 671 477 B1

FIG. 2

EP 0 671 477 B1